# EUROPEAN PATENT SPECIFICATION

(11) **EP 2 874 343 B1**
(45) Date of publication and mention of the grant of the patent: **07.03.2018**
(21) Application number: 14182130.6
(22) Date of filing: 19.08.2004
(51) Int. Cl.: H04L 9/08

(54) **POLARIZATION-CONTROLLED ENCODER FOR UNI-DIRECTIONAL QUANTUM KEY DISTRIBUTION OVER LONG DISTANCES**
POLARISIERUNGSGESTEUERTER CODIERER FÜR UNIDIREKTIONALE QUANTUM SCHLÜSSELVERTEILUNG ÜBER LANGE ENTFERNUNG
CODEUR À POLARISATION CONTRÔLÉE POUR DISTRIBUTION DE CLÉ QUANTIQUE UNIDIRECTIONELLE SUR DE LONGUES DISTANCES

(30) Priority: 02.02.2004 CN 200410013996
(43) Date of publication of application: 20.05.2015
(62) Divisional of application: 04762105.7
(73) Proprietor: University of Science and Technology of China, Hefei, Anhui 230026 (CN)
(72) Inventor: Han, Zhengfu, 230026 Anhui (CN); Zhu, Bing, 230026 Anhui (CN); Mo, Xiaofan, 230026 Anhui (CN); Guo, Guangcan, 230026 Anhui (CN)
(74) Representative: Isarpatent

(56) References cited:
- EP-A2- 1 499 040
- WO-A1-98/10560
- CALVANI R ET AL: "Polarisation independent all-optical demultiplexing using four wave mixing in dispersion shifted fibre", ELECTRONICS LETTERS, IEE STEVENAGE, GB, vol. 35, no. 1, 7 January 1999 (1999-01-07), pages 72-73, XP006011641, ISSN: 0013-5194, DOI: 10.1049/EL:19990056
- ZBINDEN H ET AL: "Interferometry with Faraday mirrors for quantum cryptography", ELECTRONICS LETTERS, IEE STEVENAGE, GB, vol. 33, no. 7, 27 March 1997 (1997-03-27) , pages 586-588, XP006007294, ISSN: 0013-5194, DOI: 10.1049/EL:19970427

## Description

This application is a divisional application of EP04762105.7 (PCT/CN2004/000969) entitled "A Polarization-Controlled Encoding Method, Encoder and Quantum Key Distribution System" and having an application date of August 19, 2004.

### Field of the Invention

This invention relates to the field of secure optical communication, and more particularly to a polarization-controlled encoder.

### Description of the Related Art

Early encoding scheme of quantum key distribution is based upon photon polarization. This scheme is fit for free-space communication instead of fiber communication. That's because the symmetry of normal fiber is not good and the interference in transmission path disturbs the polarization state, the photon polarization will be changed during transmission in it. US 5307410 discloses a phase encoding scheme of quantum key distribution which bases on a pair of unbalanced Mach-Zehnder interferometers. Because the optical pulses pass through the different arms of the different interferometers in transmitter and receiver, the disturbance they suffered is not exactly identical to each other and can't be counteracted. The stability and anti-jamming ability of the system is not good. Also because two photon pulses pass through the different arms of transmitter's interferometer, the polarization relation between two photon pulses is uncertain when they enter the quantum channel. This system is sensitive to disturbance in quantum channel, especially for long distance quantum key distribution. A lot of variation of this scheme has no essential improvement.

In order to improve the stability of above scheme, a publication in Applied Physics Letters (vol77 (No.7), 793 (1997)) discloses a solution that uses Faraday mirrors in receiver to reflect optical pulses back to the transmitter so that the interfering pulses follow exactly the same spatial path. This will get self-balancing effect. This scheme assumes that the disturbance is same when optical pulses pass through the same position twice and then they are counteracted to achieve the object of anti-jamming and stability. In fact, it works only for short distance and low disturbance frequency. When transmission distance increases, the time slot in which the optical pulses pass through the same position twice also increases, and the anti-jamming ability decreases. Furthermore, because the optical pulses pass through the same quantum channel twice, the insertion loss should be double. This can be solved by method with strong coming laser pulse and attenuating it to single photon level after reflecting. But, it can be used only for attenuated laser source. The ideal optical source for quantum key distribution is single photon source. When the single photon source becomes available, the maximum transmission distance should be half of the unidirectional scheme. On the other hand, an eavesdropper can attenuate the strong coming laser pulse before it reach the communication receiver, and then combine it with a spy laser pulse whose wavelength is close to the original one to make the total power as same as before, that will make power monitor of no effect. When the signals come back, the spy signal can be separated to get the information of communication receiver, and the original signal will be still transmitted to transmitter through an "ultra-low loss channel" so that the eavesdropper won't be detected. This is deadly for information security.

EP Patent Publication No. 1324101 discloses an optical system of a transmission device for quantum cryptograph, which includes a Faraday mirror and a phase modulator. The phase modulator has multiple refractivity, and it is inevitable to lose an extreme amount of input due to the configuration of the optical path. As a result, the signal to noise (S/N) ratio is reduced, which makes an adjustment at start time difficult. A light pulse incident to the transmission device includes two light pulses of a transverse electronic polarization wave and a transverse magnetic polarization wave for a phase modulator. The light pulse of the transverse electronic polarization wave is changed to the transverse magnetic polarization wave by a Faraday mirror, and the transverse magnetic polarization wave is changed to the transverse electronic polarization wave by rotating the polarization plate and reflecting by the Faraday mirror, and output from the transmission device.; Two polarization beam splitters are used so that the light pulse of the transverse magnetic polarization wave should bypass the phase modulator. Only light pulse of the transverse electronic polarization wave is carried to the phase modulator.

CN 1 424 826 discloses an optical-fibre single-photon routing controller that is composed of the light path consisting of single photon incident port, circulator, optical fibre coupler, optical fibre, polarization controllers and phase modulator, and the circuit consisting of phase modulator and delay signal generator. Its success rate is over 92%.

Elliot C et al., "Quantum Cryptography in practice" discusses that BBN, Harvard, and Boston University are building the DARPA Quantum Network, the world's first network that delivers end-to-end network security via high-speed Quantum Key Distribution, and testing that Network against sophisticated eavesdropping attacks. The first network link has been up and steadily operational in our laboratory since December 2002. It provides a Virtual Private Network between private enclaves, with user traffic protected by a weak-coherent implementation of quantum cryptography. This prototype is suitable for deployment in metro-size areas via standard telecom (dark) fiber. In this paper, we introduce quantum cryptography, discuss its relation to modem secure networks, and describe its unusual physical layer, its specialized quantum cryptographic protocol suite (quite interesting in its own right), and our extensions to IPsec to integrate it with quantum cryptography.

WO 95/07584 discloses that in a method of communication using quantum cryptography an encryption alphabet is used for coding signals for transmission on a quantum channel. The encryption alphabet comprises pairs of operators applied successively to single-photon signals transmitted onto the quantum channel with a pre-determined delay between them. When the signals are detected, the different signals of each pair are split according to their encoded state and directed to different detectors via paths giving a differential delay. The delay is substantially complementary to the original pre-determined delay. Coincidence detection is employed at the detectors to eliminate spurious detection counts.

US 5,768,378 discloses that in a method of quantum cryptography, a transmitter communicates on a quantum channel with several receivers. The receivers are located on different branches of a common communications network. The method establishes a different respective secret key for each receiver. A timing pulse may be transmitted from the transmitter to the receivers to synchronize the receivers prior to a transmission on a quantum channel. The quantum channel may be multiplexed and transmitted concurrently with classical multi-photon transmissions on the network.

CHIP ELLIOTT: "The DARPA Quantum Network" describes that a team from BBN Technologies, Boston University, and Harvard University has recently built and begun to operate the world's first Quantum Key Distribution (QKD) network under DARPA sponsorship. The DARPA Quantum Network became fully operational on October 23, 2003 in BBN's laboratories, and in June 2004 was fielded through dark fiber under the streets of Cambridge, Mass., to link our campuses with non-stop quantum cryptography, twenty-four hours per day. As of December 2004, it consists of six nodes. Four are 5 MHz, BBN-built BB84 systems designed for telecommunications fiber and inter-connected by a photonic switch. Two are the electronics subsystems for a high speed free-space system designed and built by NIST. This paper describes the motivation for our work, the current status of the DARPA Quantum Network, its unique optical switching and key relay protocols, and our future plans.

TANZILLI S ET AL: "PPLN waveguide for quantum communication" reports on energy-time and time-bin entangled photon-pair sources based on a periodically poled lithium niobate (PPLN) waveguide. Degenerate twin photons at 1314 nm wavelength are created by spontaneous parametric down-conversion and coupled into standard telecom fibers. Our PPLN waveguide features a very high conversion efficiency of about 10^(-6), roughly 4 orders of magnitude more than that obtained employing bulk crystals. Even if using low power laser diodes, this engenders a significant probability for creating two pairs at a time - an important advantage for some quantum communication protocols. We point out a simple means to characterize the pair creation probability in case of a pulsed pump. To investigate the quality of the entangled states, we perform photon-pair interference experiments, leading to visibilities of 97% for the case of energy-time entanglement and of 84% for the case of time-bin entanglement. Although the last figure must still be improved, these tests demonstrate the high potential of PPLN waveguide based sources to become a key element for future quantum communication schemes.

WO 2004/073228 discloses a single-photon "watch dog" detector for a two-way quantum key distribution system. By counting the number of weak pulses entering and/or leaving the reflecting QKD station, an eavesdropper that attempts to add weak pulses to the quantum channel in order to gain phase information from the phase modulator at Alice in order to deduce information about the key being exchanged can be detected.

ZBINDEN H ET AL: "Interferometry with Faraday mirrors for quantum cryptography" discusses discloses Quantum Cryptography over 23km of installed Telecom fiber using a novel interferometer with Faraday mirrors. The interferometer needs no alignment nor polarization control and features 99.8% fringe visibility. A secret key of 20kbit length with a error rate of 1.35% for 0.1 photon per pulse was produced.

WO 96/06491 discloses that in a method of communication using quantum cryptography, single-photon signals from a highly attenuated source are modulated and subsequently detected. In the step of detecting the modulated signal, the signal is split between two branches according to its encoded state. Signals corresponding to different encoded states are detected independently in the respective branches and the rate of detection of coincident signals is determined. This rate is compared with a threshold to detect the presence of an eavesdropper.

WO 95/07583 discloses a method of communication based on quantum cryptography that is modified to include an initial step of outputting from, e.g., a transmitter, a single-photon signal, which may be unmodulated. A receiver then randomly selects one of a plurality of encryption alphabets corresponding to different, non-commuting quantum mechanical operators. The receiver modulates the single-photon signal with the selected operator and returns the signal to the transmitter. The transmitter in turn randomly selects a quantum mechanical operator and uses that operator in detecting the returned signal modulated by the receiver. Alternatively, the transmitter may randomly select one of a plurality of encryption alphabets and use that encryption alphabet in modulating the signal. The signal is then further modulated at the receiver using a predetermined encryption alphabet. When the signal is received back at the transmitter, it is detected using the same quantum mechanical operator as was initially used to modulate it. Comparison is made of the states of the single-photon signals as transmitted and received to detect the presence of any eavesdropper.

WO 97/44936 discloses a communication system that uses quantum cryptography for the secure distribution of a key. A single-photon signal is phase-modulated and transmitted over a pair of time-multiplexed transmission paths. With each original single-photon signal in a given one of the transmission paths, a duplicate signal is transmitted. The duplicate is identically modulated and orthogonally polarised. At the receiver, the outputs of the two paths are combined interferometrically. A single polarisation-insensitive measurement is derived from the combined contributions of the orthogonally polarised signals.

WO 98/10560 discloses a system and method of communicating a key between two stations using an interferometric system for quantum cryptography. The method comprises the step of sending at least two light pulses over a quantum channel and detecting the interference created by said pulses in one station. The interfering pulses run over the same arms of said interferometer, but in another sequence, so that they are delayed when they run over said quantum channel. The pulses are reflected by at least Faraday mirrors at the ends of said quantum channel, so as to cancel polarization effects. Advantages: the system does not need alignment or balancing between the arms of the interferometers.

Calvani et al (Electronics Letters, vol. 35, no. 1, 1999, p. 72-73) relate to a polarization independent demultiplexer based on four wave mixing.

Zbinden et al (Electronics Letters, vol. 33, no. 7, 1997, p. 586-588) disclose an interferometry method for quantum cryptography comprising Faraday mirrors.

EP 1 499 040 A2 discloses a quantum communication system, wherein a signal pulse and a reference pulse are separated in time, wherein the reference pulse has a higher probability of containing more than one photon than the signal pulse.

### Summary of the Invention

The invention provides transmitting sides for a quantum key distribution system as recited in claims 1, 3, and 5. Further, the invention provides receiving sides for a quantum key distribution system as recited in claims 7, 9, and 11. The invention also provides a quantum key distribution system as recited in claim 13. Preferred features of the invention are set out in the dependent claims.

The system can provide unconditional secure key distribution between two users.

Comparing with existing coder bases on Mach-Zehnder interferometer, the encoder of present patent controls polarization state of optical pulse inside itself. This makes it insensitive to disturbance on itself so that the environment requirements of quantum key distribution system reduced largely. Because two pulses injected into the quantum channel have same polarization state, the disturbance they suffered when transmitting is compensated when interfering in receiver. That means signal transmitting is independent of channel disturbance. The stability of system is improved greatly. In the encoder with 90 degree Faraday mirrors according to the invention, the pulse passes through the phase modulator twice with orthogonal polarization. If the duration of phase modulating signal is larger than the time slot during which the pulse pass through modulator twice, the modulation will be independent of polarization. So the polarization-dependent modulator can be used to achieve polarization-independent modulation. The requirement of modulation rate will also be reduced. In the encoder with polarization-maintained beam splitter according to the invention, since polarization of optical pulses is maintained, polarization-dependent modulator can be used.

In quantum key distribution system according to the invention, return photon separating and detecting unit can be added to separate and detect any reverse transmitted photons. This will not only prevent spy photons from entering the coder to eavesdrop information but also detect whether there is an eavesdropper. Since single photon detector and circulator have a certain range of response wavelength, optical band pass filter can be added in the quantum key distribution system so that optical pulses with wavelength in working spectrum can pass through the filter, pulses with wavelength out of working spectrum cannot pass through the filter. This can compensate the disadvantage that single photon detector and circulator don't have enough response band.

### Brief Description of the Drawings

FIG. 1 is a block diagram of Mach-Zehnder interferometer based polarization-controlled with polarization-maintained paths.
FIG. 2 is a block diagram of polarization-controlled encoder with mirrors and polarization-maintained paths.
FIG. 3 is a block diagram of polarization-controlled encoder with 90 degree Faraday mirrors.
FIG. 4 is a block diagram of another type of polarization-controlled encoder with 90 degree Faraday mirrors.
FIG. 5 is a block diagram of polarization-controlled encoder with 90 degree Faraday mirrors in which the modulator is provided in the output path.
FIG. 6 is a block diagram of polarization-controlled encoder with variable beam splitter, mirrors and polarization-maintained paths.
FIG. 7 is a block diagram of polarization-controlled encoder with variable beam splitter and 90 degree Faraday mirrors.
FIG. 8 shows one return photon separating and detecting unit.
FIG. 9 shows another return photon separating and detecting unit which has band pass filter.
FIG. 10 is a block diagram of quantum key distribution system whose kernel part is polarization-controlled encoder and quantum channel is optical fiber.

### Detailed Description of the Preferred Embodiment

### First Embodiment

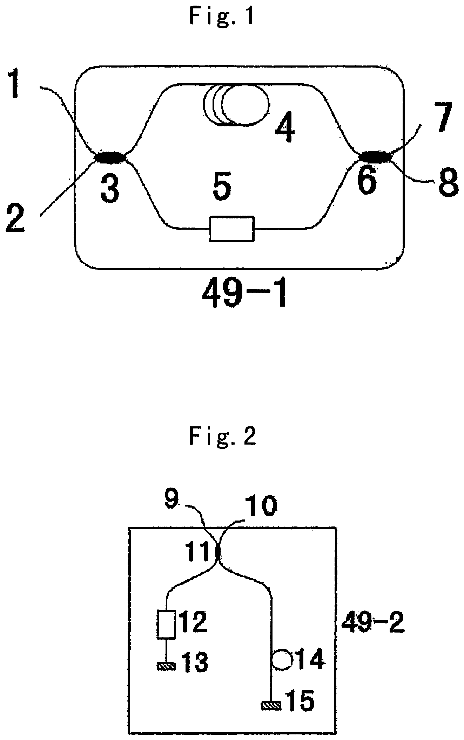

The first configuration of polarization-controlled encoder in quantum key distribution system is shown in FIG. 1. It includes two 2×2*-*3*dB* polarization-maintained beam splitters **3** and **6,** one polarization-maintained phase modulator **5** and one polarization-maintained delay line **4.** These form a Mach-Zehnder interferometer. Any one of the two ports **1** and **2** which are in the same side of 3*dB* beam splitter **3** can be an input port of polarization-controlled encoder. Any one of the two ports **7** and **8** which are in the same side of 3*dB* beam splitter **6** can be output port. The modulator **5** and delay line **4** (no sequencing) can be inserted into one arm of the Mach-Zehnder interferometer or two arms separately. When the system works, an optical pulse is injected into port **1** or **2** of beam splitter **3** and divided into two pulses. One pulse passes through the modulator **5.** Another one pass through the delay line **4.** Then they are recombined by beam splitter **6** and output from port **7** or **8.** Because all the paths are polarization-maintained, the output pulses have same polarization state. When the modulator **5** and delay line **4** are in the same arm of Mach-Zehnder interferometer, the result is the same.

### Second Embodiment

The second configuration of polarization-controlled encoder in quantum key distribution system is shown in FIG. 2. It includes one 2×2*-*3*dB* polarization-maintained beam splitter **11,** two mirrors **13** and **15,** one polarization-maintained phase modulator **12** and one polarization-maintained delay line **14.** These two ports **9** and **10** which are in the same side of *3dB* beam splitter **11** are input and output ports of polarization-controlled encoder respectively. One of the two ports which are in the other side of 3*dB* beam splitter **11** connects with polarization-maintained phase modulator **12** and mirror **13** in turn. The other port connects with polarization-maintained delay line **14** and mirror **15** in turn. A variation of above configuration is to connect one port of beam splitter with modulator **12,** delay line **14** and mirror in turn, and connect the other port of beam splitter with only a mirror. When the system works, an optical pulse is injected into port **9** of polarization-maintained beam splitter **11** and divided into two pulses. One pulse pass through the delay line **14** and reflected back by mirror **15.** The other pulse pass through the modulator **12** and reflected back by mirror **13.** Then they are recombined by beam splitter **11** and output from port **10.** Because all the paths are polarization-maintained, the output pulses have same polarization state. The variation of above configuration has same result. Either port **9** is input and port **10** is output or reverse have same result.

### Third Embodiment

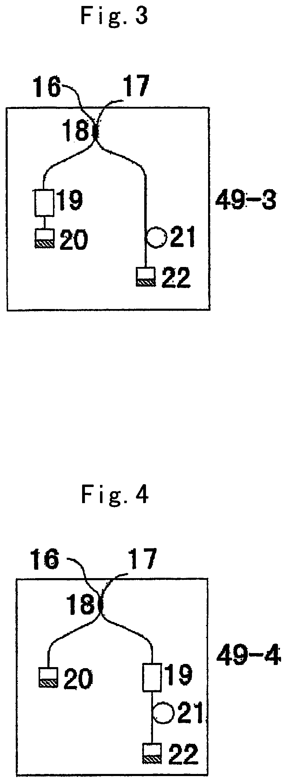

The third configuration of polarization-controlled encoder in quantum key distribution system is shown in FIG. 3. It includes one 2×2*-*3*dB* beam splitter **18,** two 90 degree Faraday mirrors **20** and **22,** one phase modulator **19** and one delay line **21.** The two ports **16** and **17** which are in the same side of 3*dB* beam splitter **18** are input and output ports of polarization-controlled encoder respectively. One of the two ports which are in the other side of 3*dB* beam splitter **18** connects with phase modulator **19** and 90 degree Faraday mirror **20** in turn. The other port connects with delay line **21** and 90 degree Faraday mirror **22** in turn. When the system works, an optical pulse is injected into port **16** of beam splitter **18** and divided into two pulses. One pulse pass through the delay line **21** and reflected back by 90 degree Faraday mirror **22.** The other pulse pass through the modulator **19** and reflected back by 90 degree Faraday mirror **20.** Then they are recombined by beam splitter **18** and output from port **17.** Because the two pulses are reflected by 90 degree Faraday mirrors and pass through their own path even times, the output pulses have same polarization state. Either port **17** is input and port **16** is output or reverse has same result.

### Fourth Embodiment

The configuration of a variation of the third embodiment is shown in FIG. 4. The difference from the third embodiment is one port of beam splitter connects with modulator **19,** delay line **21** (position of them can be exchanged) and 90 degree Faraday mirror **22** in turn, and the other port of beam splitter connects with a 90 degree Faraday mirror **20.** When the system works, an optical pulse is injected into port **16** of beam splitter **18** and divided into two pulses. One pulse pass through the phase modulator **19** and delay line **21** (no sequencing) and reflected back by 90 degree Faraday mirror **22.** The other pulse reflected back by 90 degree Faraday mirror **20.** Then they are recombined by beam splitter **18** and output from port **17.** Because the two pulses are reflected by 90 degree Faraday mirrors and pass through their own path even times, the output pulses have same polarization state. Either port **17** is input and port **16** is output or reverse has same result.

### Fifth Embodiment

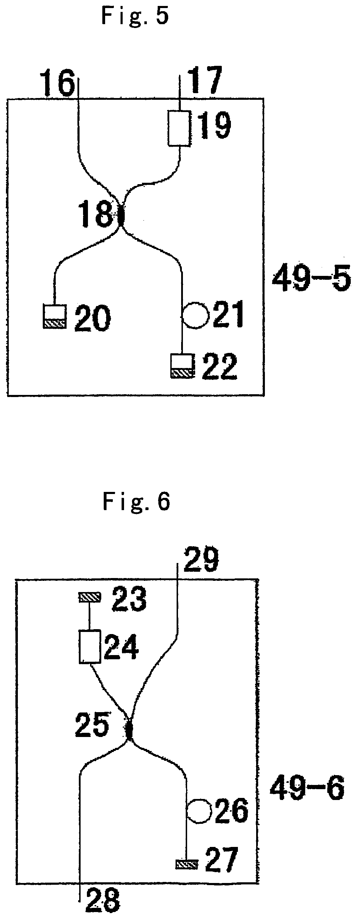

The fourth configuration of polarization-controlled encoder in quantum key distribution system is shown in FIG. 6. It includes one 2×2 polarization-maintained variable beam splitter **25,** two mirrors **23** and **27,** one polarization-maintained phase modulator **24** and one polarization-maintained delay line **26.** One of the two ports which are in the same side of variable beam splitter **25** is output port **28** of polarization-controlled encoder, and the other port connects with delay line **26** and mirror **27** in turn. One of the two ports which are in the other side of variable beam splitter **25** is input port **29** of polarization-controlled encoder, and the other port connects with polarization-maintained phase modulator **24** and mirror **23** in turn. A variation of above configuration is to connect one port of beam splitter with delay line **26** and modulator **24** (no sequencing) in turn, and connect the other port of beam splitter with only a mirror. When the system works, an optical pulse is injected into port **29** of polarization-maintained variable beam splitter **25** and divided into two pulses. One pulse exits directly from port **28** of polarization-maintained variable beam splitter **25.** The other pulse pass through the delay line **26** and reflected back by mirror **27,** and then pass through beam splitter **25** again and continue passing through modulator **24** and reflected by mirror **23,** and then pass through the beam splitter **25** at third time and output from port **28.** When splitting the optical pulse, the splitting ratio of variable beam splitter is regulated to make the two pulses exit from port **28** have equal amplitude. Because all the paths are polarization-maintained, the output pulses have same polarization state. The variation of above configuration has same result. Either port **28** is input and port **29** is output or reverse has same result.

### Sixth Embodiment

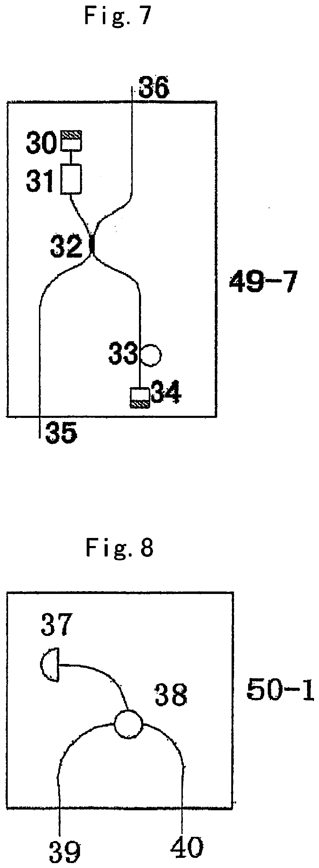

The fifth configuration of polarization-controlled encoder in quantum key distribution system is shown in FIG. 7. It includes one 2×2 variable beam splitter **32,** two 90 degree Faraday mirrors **30** and **34,** one phase modulator **31** and one delay line **33.** One of the two ports which are in the same side of variable beam splitter **32** is output port **35** of polarization-controlled coder, and the other port connects with delay line **33** and 90 degree Faraday mirror **34** in turn. One of the two ports which are in the other side of variable beam splitter **32** is input port **36** of polarization-controlled encoder, and the other port connects with phase modulator **31** and 90 degree Faraday mirror **30** in turn. A variation of above configuration is to connect one port of beam splitter with delay line **33** and modulator **31** (no sequencing) in turn, and connect the other port of beam splitter with only a 90 degree Faraday mirror. When the system works, an optical pulse is injected into port **36** of variable beam splitter **32** and divided into two pulses. One pulse outputs directly from port **35** of variable beam splitter **32.** The other pulse pass through the delay line **33** and reflected back by 90 degree Faraday mirror **34,** and then passes through beam splitter **32** again and continue passing through modulator **31** and reflected by 90 degree Faraday mirror **30,** and then passes through the beam splitter **32** at third time and exits from port **35.** When splitting the optical pulse, the splitting ratio of variable beam splitter is regulated to make the two pulses output from port **35** have equal amplitude. Because the two pulses are reflected by 90 degree Faraday mirrors and pass through their own path even times, the output pulses have same polarization state. The variation of above configuration has same result. Either port **35** is input and port **36** is output or reverse have same result.

### Seventh Embodiment

In above five configurations of polarization-controlled encoder, the phase modulator can be moved to output path to get the same result. For example, a polarization-controlled encoder with phase modulator in output path is shown in FIG. 5. It includes one 2×2*-*3*dB* beam splitter **18,** two 90 degree Faraday mirrors **20** and **22,** one phase modulator **19** and one delay line **21.** Port **16** of the two ports which are in the same side of 3*dB* beam splitter **18** is input port of polarization-controlled encoder, and the other port connects with modulator **19** as output port **17** of encoder. One of the two ports which are in the other side of 3*dB* beam splitter **18** connects with 90 degree Faraday mirror 20, and the other port connects with delay line **21** and 90 degree Faraday mirror **22** in turn. When the coder is used in receiver, the modulator which is located in output path must be moved to input path. For example, modulator **19** in coder **49-5** must connect with port **16** instead of port **17.** When the system works, an optical pulse is injected into port **16** of beam splitter **18** and divided into two pulses. One pulse pass through the delay line **21** and reflected back by 90 degree Faraday mirror **22.** The other pulse is reflected back by 90 degree Faraday mirror **20.** Then they are recombined by beam splitter **18,** pass through modulator **19** and exit from port **17.** Because these two pulses are reflected by 90 degree Faraday mirrors and pass through their own path even times, the output pulses have same polarization state. When this encoder is used in receiver, the modulator **19** which is located in output path must be moved to input path. Either in output path of transmitter or input path of receiver, the modulator need not be polarization-maintained.

### Eighth Embodiment

The return photon separating and detecting unit in the quantum key distribution system is made up of optical circulator **38** and single photon detector **37.** The input port **39** of optical circulator is the input port of return photon separating and detecting unit. The output port **40** of optical circulator is the output port of return photon separating and detecting unit. The return photon injected into port **40** will be separated by circulator **38** and detected by single photon detector **37.** The configuration of the unit is shown in FIG. 8. When the system works, photons injected into port **39** of circulator pass through the circulator directly and exit from port **40.** If there are photons injected into port **40,** they will be prevented from exiting from port **39** but guided to single photon detector **37** by circulator **38** in order to detect whether there are spy photons or not. When this unit is used in receiver, single photon detector **37** could detect signal photon to get useful key information.

### Ninth Embodiment

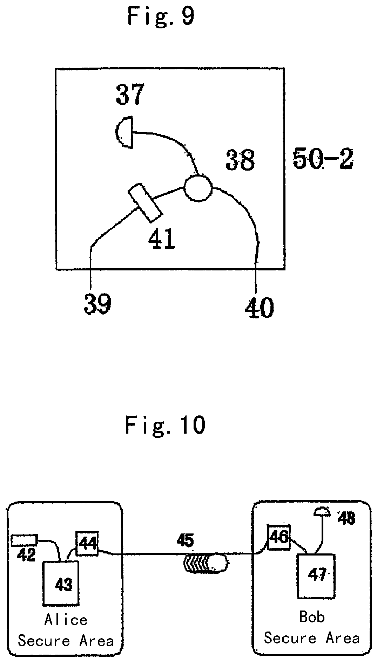

Since optical circulator and single photon detector have limited response spectrum, there may be photons whose wavelength is out of response spectrum enter the polarization-controlled encoder. A variation of the return photon separating and detecting unit is shown in FIG. 9. The difference from the above one is that an optical band pass filter **41** is added after input port **39.** When the system works, photons in response spectrum pass through the optical band pass filter freely, but other photons are blocked. This will improve the system's ability of resisting eavesdropping.

### Tenth Embodiment

A quantum key distribution system including the polarization-controlled coder, return photon separating and detecting unit, single photon detector and optical pulse source is shown in FIG. 10. The transmitter is made up of single photon source **42** (it can be replaced by simulative single photon source which is made up of laser and attenuator), polarization-controlled encoder **43** and return photon separating and detecting unit **44.** The input port of encoder **43** (it can be encoder **49-1, 49-2, 49-3, 49-6, 49-7** or any variation of them) connects with the output port of single photon source **42.** The output port of encoder **43** connects with the input port of return photon separating and detecting unit **44** (it can be return photon separating and detecting unit **50-1** or **50-2**). The output port of unit **44** connects with quantum channel **45.**

The receiver is made up of polarization-controlled encoder **47** (it can be encoder **49-1, 49-2, 49-3, 49-6, 49-7** or any variation of them, wherein **49-3** or **49-7** is better), return photon separating and detecting unit **46** (it can be return photon separating and detecting unit **50-1** or **50-2**) and single photon detector **48.** Quantum channel **45** connects with the input port of unit **46.** The output port of unit **46** connects with the input port of coder **47.** The output port of coder **47** connects with single photon detector **48.**

The process of quantum key distribution will be described hereinafter. One single photon pulse (it can be obtained by attenuating high power laser to at most one photon per pulse in fact) which is emitted from single photon source **42** enters polarization-controlled coder **43,** and then divided into two pulses and delayed. One of these two pulses is modulated according to quantum key distribution protocol. The output two pulses pass through return photon separating and detecting unit **44,** and then enter quantum channel **45** to be transmitted to the receiver. When arrived at receiver, these two pulses pass through return photon separating and detecting unit **46** and enter polarization-controlled encoder **47.** After that, each pulse is divided into two pulses again and delayed. Then these pulses are modulated according to quantum key distribution protocol and interfere. One of output interfering pulses is sent to single photon detector **48** to be measured (in order to reduce the dark count and disturbance from un-interfering pulses, the detector should work at gate mode, and the control signal of gate could be obtained from classical signal which is sent by transmitter), and the other passes through the return photon separating and detecting unit and be measured. According to the result of measurement and record of modulation, transmitter and receiver will get one bit of key. Repeat above steps, they will get any bit of keys with unconditional security. Because there are polarization-maintained paths and 90 degree Faraday mirrors in polarization-controlled coder, two output pulses have same polarization state. That makes the system has good ability of anti-jamming. When the input and output ports are the same in transmitter and receiver, circulator and Y beam splitter should be added to separate input and output signal. When the encoders in transmitter and receiver are **49-6** or **49-7,** splitting ratio of beam splitter should be regulated to make two output pulses have equal amplitude. This will reduce the error rate of final keys.

## Claims

1. A transmitting side for a quantum key distribution system having a transmitter (42), a polarization-controlled encoder (49-3), an optical circulator (38), and a single photon detector (37);
wherein the transmitter (42) is made up of a single photon source; and
wherein the polarization-controlled encoder (49-3) comprises:
a beam splitter (18), wherein said beam splitter (18) is a 2×2 3dB beam splitter;
wherein the beam splitter (18) has a first port, a second port, a third port and a fourth port in which the first port and the second port are located on one side of the beam splitter (18), and the third port and the fourth port are located on the other side of the beam splitter (18);
a delay line (21) for delaying one of the two optical pulses;
a phase modulator (19) for phase-modulating the optical pulses according to a quantum key distribution protocol; and
a first 90 degree Faraday mirror (20) and a second 90 degree Faraday mirror (22), for reflecting the optical pulses;
**characterized in that**:
the first port of the beam splitter (18) is an output port (17) of the polarization-controlled encoder (49-3), and the second port of the beam splitter (18) is an input port (16) of the polarization-controlled encoder (49-3) which connects with an output port of the transmitter (42);
the third port of the beam splitter (18) is connected to the first 90 degree Faraday mirror (20), and the fourth port of the beam splitter (18) is connected to the second 90 degree Faraday mirror (22);
the beam splitter (18) is configured to split one optical pulse being injected into the input port (16) of the polarization-controlled encoder (49-3) into two optical pulses, and to combine the two optical pulses respectively reflected by the first and second 90 degree Faraday mirrors (20, 22) into one light beam outputted from the output port (17) of the polarization-controlled encoder (49-3);
the delay line (21) is connected between the fourth port of the beam splitter (18) and the second 90 degree Faraday mirror (22);
the phase modulator (19) is connected between the third port of the beam splitter (18) and the first 90 degree Faraday mirror (20);
the optical circulator (38) is located at the output port (17) of the polarization-controlled encoder (49-3) and has a first port (39), a second port (40), and a third port;
wherein the second port (40) of the optical circulator (38) connects with a quantum channel (45),
wherein light inputted into the first port (39) of the optical circulator (38) is outputted from the second port (40) of the optical circulator (38),
wherein light inputted into the second port (40) of the optical circulator (38) is outputted from the third port of the optical circulator (38), and
wherein the combined light beam outputted from the output port (17) of the polarization-controlled encoder (49-3) is inputted into the first port (39) of the optical circulator (38) and is outputted from the second port (40) of the optical circulator (38); and
the single photon detector (37) is connected to the third port of the optical circulator (38), for detecting return injected light from the second port (40) of the optical circulator (38).

2. The transmitting side according to claim 1, further comprising an optical band-pass filter (41) being connected to the first port (39) of the optical circulator (38) to perform optical band-pass filtering on a combined light beam outputted from the output port (17).

3. A receiving side for a quantum key distribution system having a polarization-controlled encoder (49-3), an optical circulator (38), a first single photon detector (48) and a second single photon detector (37);
wherein the polarization-controlled encoder (49-3) comprises:
a beam splitter (18), wherein said beam splitter (18) is a 2×2 3dB beam splitter;
wherein the beam splitter (18) has a first port, a second port, a third port and a fourth port in which the first port and the second port are located on one side of the beam splitter (18), and the third port and the fourth port are located on the other side of the beam splitter (18);
a delay line (21) for delaying one of the two optical pulses;
a phase modulator (19) for phase-modulating the optical pulses according to a quantum key distribution protocol; and
a first 90 degree Faraday mirror (20) and a second 90 degree Faraday mirror (22), for reflecting the optical pulses;
**characterized in that**:
the first port of the beam splitter (18) is an output port (17) of the polarization-controlled encoder (49-3) which connects with the first single photon detector (48), and the second port of the beam splitter (18) is an input port (16) of the polarization-controlled encoder (49-3);
the third port of the beam splitter (18) is connected to the first 90 degree Faraday mirror (20), and the fourth port of the beam splitter (18) is connected to the second 90 degree Faraday mirror (22);
the beam splitter (18) is configured to split one optical pulse being injected into the input port (16) of the polarization-controlled encoder (49-3) into two optical pulses, and to combine the two optical pulses respectively reflected by the first and second 90 degree Faraday mirrors (20, 22) into one light beam outputted from the output port (17) of the polarization-controlled encoder (49-3);
the delay line (21) is connected between the fourth port of the beam splitter (18) and the second 90 degree Faraday mirror (22);
the phase modulator (19) is connected between the third port of the beam splitter (18) and the first 90 degree Faraday mirror (20);
the optical circulator (38) has a first port (39), a second port (40), and a third port;
wherein the first port (39) of the optical circulator (38) connects with a quantum channel (45), and the second port (40) of the optical circulator (38) connects with the input port (16) of the polarization-controlled encoder (49-3);
wherein light inputted into the first port (39) of the optical circulator (38) is outputted from the second port (40) of the optical circulator (38),
wherein light inputted into the second port (40) of the optical circulator (38) is outputted from the third port of the optical circulator (38), and
wherein the combined light beam outputted from the output port (17) of the optical circulator (38) is inputted into the first single photon detector (48); and
the second single photon detector (37) is connected to the third port of the optical circulator (38), for detecting return injected light from the second port (40) of the optical circulator (38).

4. The receiving side according to claim 3, further comprising an optical band-pass filter (41) being connected to the first port (39) of the optical circulator (38) to perform optical band-pass filtering on a combined light beam outputted from the output port (17).

5. A quantum key distribution system having a transmitting side according to any of claims 1 or 2 and a receiving side according to any of claims 3 or 4.

## Patentansprüche

1. Senderseite für ein Quantenschlüsselverteilungssystem mit einem Sender (42), einem polarisationsgesteuerten Kodierer (49-3), einem optischen Zirkulator (38) und einem Einzelphotonendetektor (37),
wobei der Sender (42) aus einer Einzelphotonenquelle aufgebaut ist und
wobei der polarisationsgesteuerte Kodierer (49-3) Folgendes umfasst:
einen Strahlteiler (18), wobei der Strahlteiler (18) ein 2x2 3dB Strahlteiler ist,
wobei der Strahlteiler (18) einen ersten Anschluss, einen zweiten Anschluss, einen dritten Anschluss und einen vierten Anschluss hat, wobei sich der erste Anschluss und der zweite Anschluss auf einer Seite des Strahlteilers (18) befinden und sich der dritte Anschluss und der vierte Anschluss auf der anderen Seite des Strahlteilers (18) befinden,
eine Verzögerungsleitung (21) zum Verzögern eines der zwei optischen Impulse,
einen Phasenmodulator (19) zum Phasenmodulieren der optischen Impulse gemäß einem Quantenschlüsselverteilungsprotokoll und
einen ersten 90-Grad-Faraday-Spiegel (20) und einen zweiten 90-Grad-Faraday-Spiegel (22) zum Reflektieren der optischen Impulse,
**dadurch gekennzeichnet, dass**:
der erste Anschluss des Strahlteilers (18) ein Ausgangsanschluss (17) des polarisationsgesteuerten Kodierers (49-3) ist und der zweite Anschluss des Strahlteilers (18) ein Eingangsanschluss (16) des polarisationsgesteuerten Kodierers (49-3) ist, der sich mit einem Ausgangsanschluss des Senders (42) verbindet, der dritte Anschluss des Strahlteilers (18) mit dem ersten 90-Grad-Faraday-Spiegel (20) verbunden ist und der vierte Anschluss des Strahlteilers (18) mit dem zweiten 90-Grad-Faraday-Spiegel (22) verbunden ist,
der Strahlteiler (18) konfiguriert ist, um einen optischen Impuls, der in den Eingangsanschluss (16) des polarisationsgesteuerten Kodierers (49-3) eingekoppelt wird, in zwei optische Impulse zu teilen und die zwei optischen Impulse, die jeweils durch den ersten und zweiten 90-Grad-Faraday-Spiegel (20, 22) reflektiert werden, in einen Lichtstrahl zu kombinieren, der von dem Ausgangsanschluss (17) des polarisationsgesteuerten Kodierers (49-3) ausgegeben wird,
die Verzögerungsleitung (21) zwischen dem vierten Anschluss des Strahlteilers (18) und dem zweiten 90-Grad-Faraday-Spiegel (22) verbunden ist,
der Phasenmodulator (19) zwischen dem dritten Anschluss des Strahlteilers (18) und dem ersten 90-Grad-Faraday-Spiegel (20) verbunden ist,
sich der optische Zirkulator (38) an dem Ausgangsanschluss (17) des polarisationsgesteuerten Kodierers (49-3) befindet und einen ersten Anschluss (39), einen zweiten Anschluss (40) und einen dritten Anschluss hat,
wobei sich der zweite Anschluss (40) des optischen Zirkulators (38) mit einem Quantenkanal (45) verbindet, wobei Licht, das in den ersten Anschluss (39) des optischen Zirkulators (38) eingegeben wird, von dem zweiten Anschluss (40) des optischen Zirkulators (38) ausgegeben wird,
wobei Licht, das in den zweiten Anschluss (40) des optischen Zirkulators (38) eingegeben wird, von dem dritten Anschluss des optischen Zirkulators (38) ausgegeben wird und
wobei der kombinierte Lichtstrahl, der von dem Ausgangsanschluss (17) des polarisationsgesteuerten Kodierers (49-3) ausgegeben wird, in den ersten Anschluss (39) des optischen Zirkulators (38) eingegeben wird und von dem zweiten Anschluss (40) des optischen Zirkulators (38) ausgegeben wird und
der Einzelphotonendetektor (37) mit dem dritten Anschluss des optischen Zirkulators (38) zum Erfassen von eingekoppeltem Rücklicht aus dem zweiten Anschluss (40) des optischen Zirkulators (38) verbunden ist.

2. Senderseite nach Anspruch 1, die ferner einen optischen Bandpassfilter (41) umfasst, der mit dem ersten Anschluss (39) des optischen Zirkulators (38) verbunden ist, um ein optisches Bandpassfiltern auf einem kombinierten Lichtstrahl durchzuführen, der von dem Ausgangsanschluss (17) ausgegeben wird.

3. Empfängerseitefür ein Quantenschlüsselverteilungssystem mit einem polarisationsgesteuerten Kodierer (49-3), einem optischen Zirkulator (38), einem ersten Einzelphotonendetektor (48) und einem zweiten Einzelphotonendetektor (37),
wobei der polarisationsgesteuerte Kodierer (49-3) Folgendes umfasst:
einen Strahlteiler (18), wobei der Strahlteiler (18) ein 2x2 3dB Strahlteiler ist,
wobei der Strahlteiler (18) einen ersten Anschluss, einen zweiten Anschluss, einen dritten Anschluss und einen vierten Anschluss hat, wobei sich der erste Anschluss und der zweite Anschluss auf einer Seite des Strahlteilers (18) befinden und sich der dritte Anschluss und der vierte Anschluss auf der anderen Seite des Strahlteilers (18) befinden,
eine Verzögerungsleitung (21) zum Verzögern eines der zwei optischen Impulse,
einen Phasenmodulator (19) zum Phasenmodulieren der optischen Impulse gemäß einem Quantenschlüsselverteilungsprotokoll und
einen ersten 90-Grad-Faraday-Spiegel (20) und einen zweiten 90-Grad-Faraday-Spiegel (22) zum Reflektieren der optischen Impulse,
**dadurch gekennzeichnet, dass**:
der erste Anschluss des Strahlteilers (18) ein Ausgangsanschluss (17) des polarisationsgesteuerten Kodierers (49-3) ist, der sich mit dem ersten Einzelphotonendetektor (48) verbindet, und der zweite Anschluss des Strahlteilers (18) ein Eingangsanschluss (16) des polarisationsgesteuerten Kodierers (49-3) ist, der dritte Anschluss des Strahlteilers (18) mit dem ersten 90-Grad-Faraday-Spiegel (20) verbunden ist und der vierte Anschluss des Strahlteilers (18) mit dem zweiten 90-Grad-Faraday-Spiegel (22) verbunden ist, der Strahlteiler (18) konfiguriert ist, um einen optischen Impuls, der in den Eingangsanschluss (16) des polarisationsgesteuerten Kodierers (49-3) eingekoppelt wird, in zwei optische Impulse zu teilen und die zwei optischen Impulse, die jeweils durch den ersten und zweiten 90-Grad-Faraday-Spiegel (20, 22) reflektiert werden, in einen Lichtstrahl zu kombinieren, der von dem Ausgangsanschluss (17) des polarisationsgesteuerten Kodierers (49-3) ausgegeben wird,
die Verzögerungsleitung (21) zwischen dem vierten Anschluss des Strahlteilers (18) und dem zweiten 90-Grad-Faraday-Spiegel (22) verbunden ist,
der Phasenmodulator (19) zwischen dem dritten Anschluss des Strahlteilers (18) und dem ersten 90-Grad-Faraday-Spiegel (20) verbunden ist,
der optische Zirkulator (38) einen ersten Anschluss (39), einen zweiten Anschluss (40) und einen dritten Anschluss hat,
wobei sich der erste Anschluss (39) des optischen Zirkulators (38) mit einem Quantenkanal (45) verbindet und sich der zweite Anschluss (40) des optischen Zirkulators (38) mit dem Eingangsanschluss (16) des polarisationsgesteuerten Kodierers (49-3) verbindet,
wobei Licht, das in den ersten Anschluss (39) des optischen Zirkulators (38) eingegeben wird, von dem zweiten Anschluss (40) des optischen Zirkulators (38) ausgegeben wird,
wobei Licht, das in den zweiten Anschluss (40) des optischen Zirkulators (38) eingegeben wird, von dem dritten Anschluss des optischen Zirkulators (38) ausgegeben wird und
wobei der kombinierte Lichtstrahl, der von dem Ausgangsanschluss (17) des optischen Zirkulators (38) ausgegeben wird, in den ersten Einzelphotonendetektor (48) eingegeben wird und
der zweite Einzelphotonendetektor (37) mit dem dritten Anschluss des optischen Zirkulators (38) zum Erfassen von eingekoppeltem Rücklicht aus dem zweiten Anschluss (40) des optischen Zirkulators (38) verbunden ist.

4. Empfängerseitenach Anspruch 3, die ferner einen optischen Bandpassfilter (41) umfasst, der mit dem ersten Anschluss (39) des optischen Zirkulators (38) verbunden ist, um ein optisches Bandpassfiltern auf einem kombinierten Lichtstrahl durchzuführen, der von dem Ausgangsanschluss (17) ausgegeben wird.

5. Quantenschlüsselverteilungssystem mit einer Senderseite nach einem der Ansprüche 1 oder 2 und einer Empfängerseitenach einem der Ansprüche 3 oder 4.

## Revendications

1. Côté émission pour un système de distribution quantique de clé ayant un émetteur (42), un codeur à polarisation contrôlée (49-3), un circulateur optique (38), et un détecteur de photon unique (37) ;
dans lequel l'émetteur (42) est constitué d'une source photon unique ; et
dans lequel le codeur à polarisation contrôlée (49-3) comprend :
un séparateur de faisceaux (18), dans lequel ledit séparateur de faisceaux (18) est un séparateur de deux x deux faisceaux 3 dB ; le séparateur de faisceaux (18) présentant un premier raccord, un deuxième raccord, un troisième raccord et un quatrième raccord dans lequel le premier raccord et le deuxième raccord sont situés d'un côté du séparateur de faisceaux (18), et le troisième raccord et le quatrième raccord sont situés de l'autre côté du séparateur de faisceaux (18) ;
une ligne à retard (21) pour retarder une des deux impulsions optiques ;
un modulateur de phase (19) pour moduler la phase des impulsions optiques selon un protocole de distribution quantique de clé ; et
un premier miroir de Faraday à 90 degrés (20) et un second miroir de Faraday à 90 degrés (22), pour réfléchir les impulsions optiques ;
**caractérisé en ce que** :
le premier raccord du séparateur de faisceaux (18) est un raccord de sortie (17) du codeur à polarisation contrôlée (49-3), et le deuxième raccord du séparateur de faisceaux (18) est un raccord d'entrée (16) du codeur à polarisation contrôlée (49-3) qui est relié à un raccord de sortie de l'émetteur (42) ;
le troisième raccord du séparateur de faisceaux (18) est relié au premier miroir de Faraday à 90 degrés (20), et le quatrième raccord du séparateur de faisceaux (18) est relié au second miroir de Faraday à 90 degrés (22) ;
le séparateur de faisceaux (18) est configuré pour séparer une impulsion optique qui est injectée dans le raccord d'entrée (16) du codeur à polarisation contrôlée (49-3) en deux impulsions optiques, et pour combiner les deux impulsions optiques respectivement réfléchies par le premier et le second miroirs de Faraday à 90 degrés (20, 22) en un faisceau lumineux sorti du raccord de sortie (17) du codeur à polarisation contrôlée (49-3) ;
la ligne à retard (21) est reliée entre le quatrième raccord du séparateur de faisceaux (18) et le second miroir de Faraday à 90 degrés (22) ;
le modulateur de phase (19) est relié entre le troisième raccord du séparateur de faisceaux (18) et le premier miroir de Faraday à 90 degrés (20) ;
le circulateur optique (38) est situé au niveau du raccord de sortie (17) du codeur à polarisation contrôlée (49-3) et présente un premier raccord (39), un deuxième raccord (40), et un troisième raccord ;
dans lequel le deuxième raccord (40) du circulateur optique (38) est relié à un canal quantique (45),
dans lequel la lumière entrée dans le premier raccord (39) du circulateur optique (38) est sortie du deuxième raccord (40) du circulateur optique (38),
dans lequel la lumière entrée dans le deuxième raccord (40) du circulateur optique (38) est sortie du troisième raccord du circulateur optique (38), et
dans lequel le faisceau lumineux combiné sorti du raccord de sortie (17) du codeur à polarisation contrôlée (49-3) est entré dans le premier raccord (39) du circulateur optique (38) et est sorti du deuxième raccord (40) du circulateur optique (38) ; et
le détecteur détecteur de photon unique (37) est relié au troisième raccord du circulateur optique (38), pour détecter le retour de la lumière injectée depuis le deuxième raccord (40) du circulateur optique (38).

2. Côté émission selon la revendication 1, comprenant en outre un filtre passe-bas optique (41) qui est relié au premier raccord (39) du circulateur optique (38) pour réaliser le filtrage passe-bas optique sur un faisceau lumineux combiné sorti du raccord de sortie (17).

3. Côté réception pour un système de distribution quantique de clé ayant un codeur à polarisation contrôlée (49-3), un circulateur optique (38), un premier détecteur détecteur de photon unique (48) et un second détecteur détecteur de photon unique (37) ;
dans lequel le codeur à polarisation contrôlée (49-3) comprend :
un séparateur de faisceaux (18), dans lequel ledit séparateur de faisceaux (18) est un séparateur de deux x deux faisceaux 3 dB ; le séparateur de faisceaux (18) ayant un premier raccord, un deuxième raccord, un troisième raccord et un quatrième raccord dans lequel le premier raccord et le deuxième raccord sont situés d'un côté du séparateur de faisceaux (18), et le troisième raccord et le quatrième raccord sont situés de l'autre côté du séparateur de faisceaux (18) ;
une ligne à retard (21) pour retarder une des deux impulsions optiques ;
un modulateur de phase (19) pour moduler la phase des impulsions optiques selon un protocole de distribution quantique de clé ; et
un premier miroir de Faraday à 90 degrés (20) et un second miroir de Faraday à 90 degrés (22), pour réfléchir les impulsions optiques ;
**caractérisé en ce que** :
le premier raccord du séparateur de faisceaux (18) est un raccord de sortie (17) du codeur à polarisation contrôlée (49-3) qui est relié au premier détecteur détecteur de photon unique (48), et le deuxième raccord du séparateur de faisceaux (18) est un raccord d'entrée (16) du codeur à polarisation contrôlée (49-3) ;
le troisième raccord du séparateur de faisceaux (18) est relié au premier miroir de Faraday à 90 degrés (20), et le quatrième raccord du séparateur de faisceaux (18) est relié au second miroir de Faraday à 90 degrés (22) ;
le séparateur de faisceaux (18) est configuré pour séparer une impulsion optique qui est injectée dans le raccord d'entrée (16) du codeur à polarisation contrôlée (49-3) en deux impulsions optiques, et pour combiner les deux impulsions optiques respectivement réfléchies par le premier et le second miroirs de Faraday à 90 degrés (20, 22) en un faisceau lumineux sorti du raccord de sortie (17) du codeur à polarisation contrôlée (49-3) ;
la ligne à retard (21) est reliée entre le quatrième raccord du séparateur de faisceaux (18) et le second miroir de Faraday à 90 degrés (22) ;
le modulateur de phase (19) est relié entre le troisième raccord du séparateur de faisceaux (18) et le premier miroir de Faraday à 90 degrés (20) ;
le circulateur optique (38) a un premier raccord (39), un deuxième raccord (40), et un troisième raccord ;
dans lequel le premier raccord (39) du circulateur optique (38) est relié à un canal quantique (45), et le deuxième raccord (40) du circulateur optique (38) est relié au raccord d'entrée (16) du codeur à polarisation contrôlée (49-3) ;
dans lequel la lumière entrée dans le premier raccord (39) du circulateur optique (38) est sortie du deuxième raccord (40) du circulateur optique (38),
dans lequel la lumière entrée dans le deuxième raccord (40) du circulateur optique (38) est sortie du troisième raccord du circulateur optique (38), et
dans lequel le faisceau lumineux combiné sorti du raccord de sortie (17) du circulateur optique (38) est entré dans le premier détecteur détecteur de photon unique (48) ; et
le second détecteur détecteur de photon unique (37) est relié au troisième raccord du circulateur optique (38), pour détecter le retour de la lumière injectée depuis le deuxième raccord (40) du circulateur optique (38).

4. Côté réception selon la revendication 3, comprenant en outre un filtre passe-bas optique (41) qui est relié au premier raccord (39) du circulateur optique (38) pour réaliser le filtrage passe-bas optique sur un faisceau lumineux combiné sorti du raccord de sortie (17).

5. Système de distribution quantique de clé ayant un côté émission selon une quelconque des revendications 1 ou 2 et un côté réception selon une quelconque des revendications 3 ou 4.
